# EUROPÄISCHE PATENTANMELDUNG

(11) **EP 0 980 012 A1**
(43) Veröffentlichungstag der Anmeldung: **16.02.2000**
(21) Anmeldenummer: 99115540.9
(22) Anmeldetag: 02.08.1999
(51) Int. Cl.: G02B 6/44, G02B 6/50, G02B 6/38

(54) **Kabeleinführungsadapter für Kabeleinlässe bei Lichtwellenleiterkabelgarnituren**

(30) Priorität: 13.08.1998 DE 19836786
(71) Anmelder: SIEMENS AKTIENGESELLSCHAFT, 80333 München (DE)
(72) Erfinder: Finzel, Lothar, 85617 Unterschleissheim (DE); Schröder, Günter, 82140 Esting (DE); Weber, Günther, 84508 Burgkirchen (DE)

(57) **Zusammenfassung**

Die Erfindung betrifft einen Kabeleinführungsadapter (KEA) für Kabeleinlässe, wie z.B. Kabeleinführungsstutzen (ES) bei Lichtwellenleiterkabelgarnituren (KG). Der Kabeleinführungsadapter (KEA) enthält an einem Ende einen Abschluß (AKG) für den Anschluß an einen Kabeleinführungsstutzen (ES) einer Kabelgarnitur (KG) und am zweiten Ende einen Verteilerabschluß (VA) mit mehreren Einführungsöffnungen (E) zum Anschluß mehrerer Lichtwellenleiterkabel, vorzugsweise Mikrokabel (MK).

## Beschreibung

Die Erfindung betrifft einen Kabeleinführungsadapter für Kabeleinlässe bei Lichtwellenleiterkabelgarnituren.

Aus WO 97/26574 ist ein Lichtwellenleiterübertragungssystem bekannt, bei dem beispielsweise ein zylindrische Kabelgarnitur für Lichtwellenleiter eingesetzt wird. Diese Kabelgarnitur besitzt Kabeleinlässe, die speziell für Mikrokabel, bestehend aus einem Rohr und darin lose eingebrachten Lichtwellenleitern, konzipiert ist. Die Kabeleinlässe sind als Kabelstutzen ausgebildet und senkrecht zur Achse der Kabelgarnitur tangential angesetzt, so daß die Lichtwellenleiter kontinuierlich fortlaufend in die Kabelgarnitur eingeführt werden können. Die Abdichtungen zwischen den Rohren der Mikrokabel und den Kabelstutzen erfolgt durch Krimpverbindungen, Klebungen oder mit Hilfe von Schrumpfschlauchstücken. Es sind mehrere Kabeleinlässe vorgesehen; jedoch kann in jeden Kabeleinlaß nur ein Mikrokabel eingeführt werden.

Eine erste Aufgabe der Erfindung ist, eine Möglichkeit zu schaffen, daß in einen Kabeleinlaß mehrere Lichtwellenleiterkabel eingeführt werden können. Diese gestellte Aufgabe wird mit einem Kabeleinführungsadapter der eingangs erläuterten Art dadurch gelöst, daß ein rohrförmiger Aufnahmekörper an einem Ende einen Abschluß mit einer Einführung für einen Kabelgarniturenanschluß und am zweiten Ende einen Verteilerabschluß mit mehreren Einführungsöffnungen aufweist, wobei in jeder Einführungsöffnung ein Röhrchen mit nach auswärts gerichtetem Überstand angeordnet ist, an dessen freiem Ende ein Lichtwellenleiterkabel dicht ansetzbar ist.

Weiterhin ist eine zweite Aufgabe der Erfindung, einen Kabelgarnitureneinlaß so zu gestalten, daß ein nachträglicher Anschluß eines Lichtwellenleiterkabels, insbesondere eines Mikrokabels oder eines Kabeleinführungsadapters ohne Beeinträchtigung des direkten Kabelgarnitureneinlasses hergestellt werden kann. Diese gestellte Aufgabe wird mit einem Kabeleinführungsadapter dadurch gelöst, daß ein Verlängerungsrohr als erster Kabeleinführungsadapter an einem Kabelgarnitureneinlaß angesetzt ist und daß das freie Ende des Verlängerungsrohres einen an ein einzuführendes Lichtwellenleiterkabel oder an einen zweiten anzusetzenden Kabeleinführungsadapter mit einem Eingang oder mit mehreren Eingängen angepaßten Anschluß aufweist. Besonders für nachträgliche Verlegung von Lichtwellenleiterkabeln in festen Verlegegründen, wie z.B. in Straßenbelägen, wird das Mikrokabelsystem eingesetzt, bei dem Lichtwellenleiterkabel verwendet werden, die aus einem Rohr z.B. aus Stahl, Kupfer oder Kunststoff mit lose darin eingebrachten Lichtwellenleitern bestehen. Für diese Mikrokabel wurden schließlich auch spezielle Kabelgarnituren entwickelt, die beispielsweise als Kabeleinlässe tangential angesetzte Kabeleinführungsstutzen aufweisen. Diese Kabeleinführungsstutzen sind auf die Rohre der Mikrokabel abgestimmt und werden durch Krimpen, Kleben, Schrauben, Quetschen, Einsatz von Schrumpfschlauchstücken oder elastische Dichtungseinsätze dicht eingeführt und fixiert. Diese Kabeleinführungsstutzen enthalten jedoch nur eine einzige Kabeleinführungsöffnung, so daß nur jeweils ein Mikrokabel eingeführt werden kann. Der Vorteil der Kabeleinführungsadapter gemäß der Erfindung besteht nun darin, daß in einen Kabeleinführungsstutzen einer Kabelgarnitur der beschriebenen Art mehrere Mikrokabel eingeführt werden können. So werden auf der Kabeleinführungsseite des Kabeleinführungsadapters in einem Verteilerabschluß mehrere Mikrokabel aufgenommen, wobei die einzelnen Rohre der Mikrokabel hier fixiert und abgedichtet werden. Die Lichtwellenleiter selbst werden im Inneren des Kabeleinführungsadapters weitergeführt und am anderen Ende des Kabeleinführungsadapters durch eine einzige Einführung in den Kabeleinführungsstutzen der Kabelgarnitur weitergeleitet. Damit wird möglich, daß in jeden Kabeleinführungsstutzen der Kabelgarnitur mehrere Mikrokabel je nach Bedarf angeschlossen bzw. verzweigt werden können, wobei die Kabelumhüllungen, wie z.B. die Rohre der Mikrokabel, im Kabeleinführungsadapter eingesetzt werden. Auf diese Weise werden mit einem einzigen Kabeleinführungsadapter alle geforderten Anschlußbedürfnisse zufriedengestellt; vor allem ist auch eine nachträgliche Erweiterung möglich, wenn bereits bei Verlegung des Mikrokabelsystem derartige Kabeleinführungsadapter an die Kabelgarnitur angeschlossen wurden. Die in den Einführungsöffnungen des Verteilerabschlusses eingesetzten Röhrchen sind von der Länge so bemessen, daß die Enden sich aus der Verlegenut heben lassen, ohne daß eine Knickung des Röhrchens entsteht. Der Abstand zur Kabelgarnitur ist damit auch so ausreichend, daß diese bei den Abschlußarbeiten nicht gefährdet ist. Die auf der Seite des Verteilerabschlusses eingesetzten Röhrchen aus Stahl, Aluminium, Kupfer oder Kunststoff können zunächst mit Verschlüssen versehen werden, die bei Bedarf dann geöffnet werden, ohne daß die Kabelgarnitur aus dem Verlegegrund gehoben werden muß. Die im Verteilerabschluß eingesetzten Röhrchen sind außerdem so flexibel, daß sie zum Abschluß eines nachträglich einzusetzenden Mikrokabels aus der Verlegenut herausgebogen und nach den Abschlußarbeiten wieder zurückgebracht werden können. Nach der Lösung der zweiten Aufgabe ist weiter von Vorteil, wenn ein Abschluß eines Kabels oder eines Kabeleinführungsadapters an einem Kabelgarnitureneinlaß einer bereits verlegten Kabelgarnitur nicht direkt in diesen Eingangsbereich erfolgt, sondern in einem Abstand, der gewährleistet, daß durch die Montagearbeiten an der Kabelgarnitur keine Beeinträchtigung eintritt. Aus diesem Grund wird gemäß der zweiten Lösung zunächst ein Kabeleinführungsadapter in Form eines Verlängerungsrohres mit einer Länge zwischen 0,5 und 1 m am Kabelgarnitureneinlaß angesetzt. Die Neumontage eines Abschlusses erfolgt dann in dem angegebenen Abstand dadurch, daß das flexible und biegsame Verlängerungsrohr aus der Verlegenut des Verlegegrundes herausgebogen, der Abschluß an diesem Ende z.B. durch eine Krimpverbindung hergestellt und anschließend ohne Beeinträchtigung des Kabelgarnitureneinlasses wieder in die Verlegenut zurückgebracht wird. Ein solches Verlängerungsrohr besteht aus Gründen der gegenseitigen Verträglichkeit am besten aus dem gleichen Material, das beim anzuschließenden Lichtwellenleiterkabel oder Kabeleinführungsadapter verwendet wird. Der Aufnahmekörper des Kabeleinführungsadapters kann aus elektrisch leitendem oder auch nicht leitendem Material bestehen, je nachdem ob eine leitende Durchverbindung zwischen den Kabelrohren erwünscht ist oder nicht.

Die Erfindung wird nun anhand von 5 Figuren näher erläutert.
- Figur 1: zeigt einen zylinderförmigen Kabeleinführungsadapter.
- Figur 2: zeigt die Ansicht auf den Verteilerabschluß des Kabeleinführungsadapters nach Figur 1.
- Figur 3: zeigt einen konischen Kabeleinführungsadapter.
- Figur 4: zeigt den Einsatz eines Kabeleinführungsadapters an einer Kabelgarnitur.
- Figur 5: zeigt schematisch ein Lichtwellenleiterkabelnetz mit Kabelgarnituren, an denen Kabeleinführungsadapter angeschlossen sind.
- Figur 6: zeigt eine Variante mit einem Verlängerungsrohr als ersten Kabeleinführungsadapter.

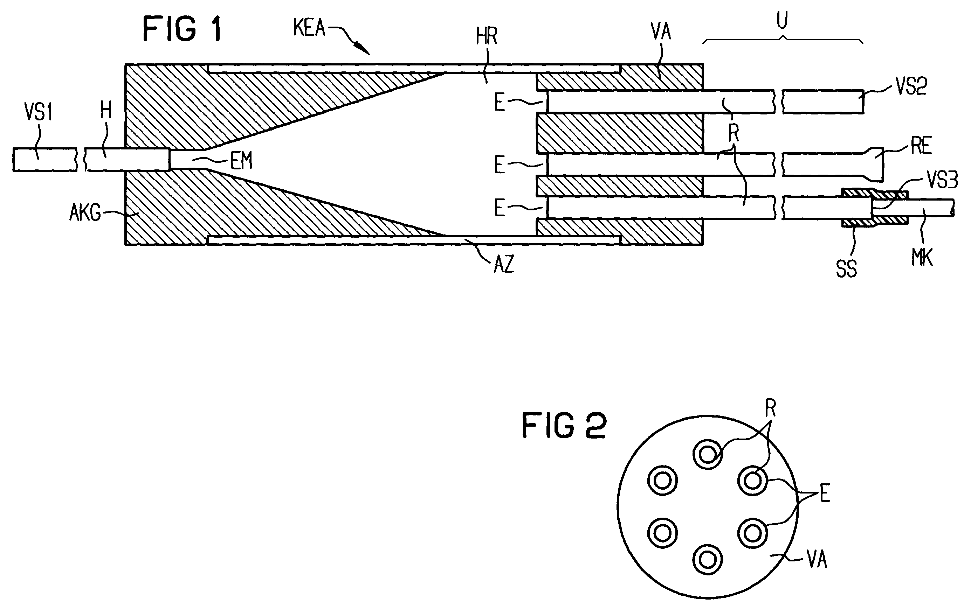

In Figur 1 wird ein erfindungsgemäßer Kabeleinführungsadapter KEA mit einem zylindrischen Aufnahmekörper AZ im Querschnitt gezeigt. Der zylindrische Aufnahmekörper AZ besteht beispielsweise aus zwei Halbschalen, die stirnseitig mit einem kabelgarniturenseitigen Abschluß AKG bzw. Verteilerabschluß VA abgeschlossen. Der kabelgarniturenseitige Abschluß AKG enthält eine konisch zulaufende Öffnung auf der Innenseite, in deren Zentrum eine Einführung EM angeordnet ist, durch die die Lichtwellenleiter zum Kabelgarniturenanschluß H geführt werden. Auf der gegenüberliegenden Stirnseite des Aufnahmekörpers KEA befindet sich der Verteilerabschluß VA, in dem mehrere Einführungsöffnungen E z.B. auf einer Kreislinie verteilt angeordnet sind. Hier werden relativ lange, knickunempfindliche, flexible Röhrchen R eingesetzt, an deren Enden die Lichtwellenleiterkabel, z.B. die Rohre von Mikrokabeln MK, dicht angesetzt sind. Die Enden der Röhrchen R können verschiedenartig gestaltet sein und sind den entsprechenden Rohren der anzukoppelnden Lichtwellenleiterkabel angepaßt, wobei die Verbindungsstellen der Röhrchen R glatt auslaufend (VS2) oder als Rohrerweiterung RE ausgebildet sein können. Die Einführung bzw. der Ansatz der Rohre der einzuführenden Lichtwellenleiterkabel erfolgt demnach stumpf im Inneren der Röhrchen R oder auf den Röhrchen R. Als Verbindungsmöglichkeit kommen z.B. Krimp-, Schraub-, Quetsch-, Gummi-, Löt- oder Klebeverbindungen in Frage oder ein dichtaufsitzender Schrumpfschlauch SS. Die Länge bzw. der Überstand U der eingesetzten Röhrchen R kann je nach Einsatzgebiet gewählt werden und beträgt im Normalfall 20 - 30 cm. Die Röhrchen R, wie auch der eingesetzte Kabelgarniturenanschluß H sind in Einführungsöffnungen E des Verteileranschlusses VA bzw. der kabelgarniturseitigen Einführung EM eingelötet oder eingeklebt. Ähnlich wie bei den Anschlüssen RE, VS2 oder VS3 kann auch die Verbindungsstelle VS1 zwischen der Kabelgarnitur und dem Kabelgarniturenanschluß H gestaltet sein, wobei die Kabelgarnitur für die Mikrokabeltechnik meist zylinderförmige, tangential angesetzte Kabeleinführungsstutzen aufweist. Die konische Ausbildung des inneren Hohlraumes HR dient zum problemlosen Einfädeln der Lichtwellenleiter in die kabelgarniturenseitige Einführung EM. Die Halbschalen des Kabeleinführungsadapters weisen z.B. Führungen und Nuten zur gegenseitigen Ausrichtung auf. Ein Filmscharnier zwischen den Halbschalen erleichtert beispielsweise ebenfalls die Montage. In den Trennfugen werden Dichtungseinlagen bekannter Art eingelegt.

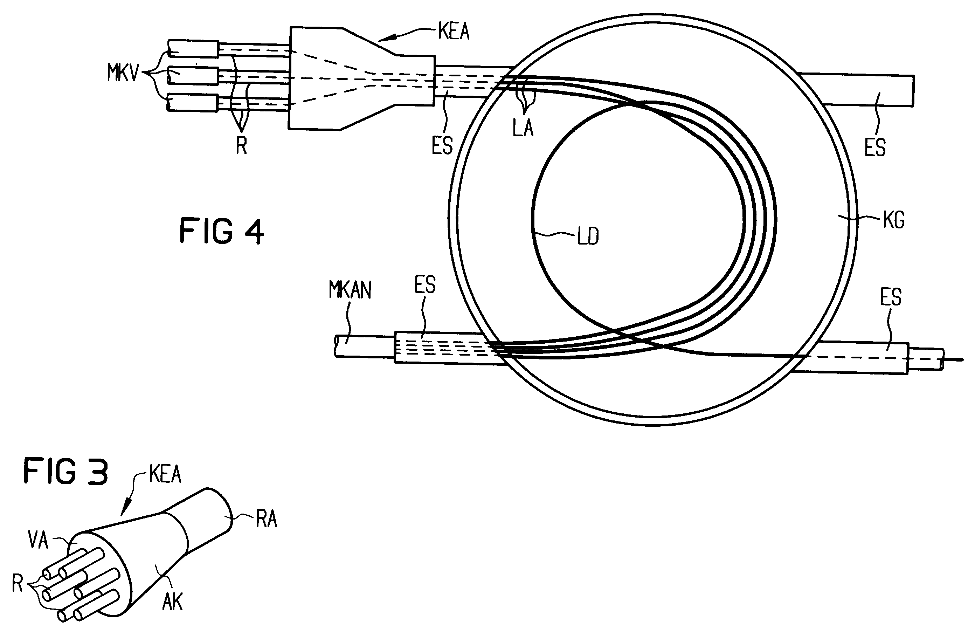

Figur 2 verdeutlicht in einer stirnseitigen Ansicht die auf einer Kreislinie des Verteilerabschlusses VA angeordneten Einführungsöffnungen E mit den eingesetzten Röhrchen R.

Figur 3 zeigt einen Kabeleinführungsadapter KEA gemäß der Erfindung mit einem konisch zulaufenden Aufnahmekörper AK. Im Verteileranschluß VA sind die Röhrchen R eingesetzt, an die die Lichtwellenleiterkabel, insbesondere Mikrokabel angesetzt werden. Der zur Kabelgarnitur führende Abschluß ist als rohrförmiger Ansatz RA ausgebildet und entspricht im Durchmesser je nach dem ob der rohrförmige Ansatz RA außen oder im Kabeleinführungsstutzen eingesetzt wird, dem Außen- oder Innendurchmesser des Kabeleinführungsstutzens der Kabelgarnitur.

Figur 4 verdeutlicht den Einsatz eines Kabeleinführungsadapters KEA an einem tangential angesetzten Kabeleinführungsstutzen ES einer zylindrischen Kabelgarnitur KG. Daraus ist zu erkennen, daß die Lichtwellenleiter des ankommenden Mikrokabels MKAN innerhalb der Kabelgarnitur KG entweder zur Verteilung auf mehrere abzweigende Mikrokabel MKV mit Lichtwellenleitern LA verteilt oder als durchgehende Lichtwellenleiter LD zu einem angesetzten abgehenden Mikrokabel MKAB weitergeführt werden. Durch den Kabeleinführungsadapter KEA gemäß der Erfindung ist es also möglich, daß an einem Kabeleinführungsstutzen ES der Kabelgarnitur KG mehrere abzweigende Lichtwellenleiterkabel, hier Mikrokabel MKV, abgeführt werden können.

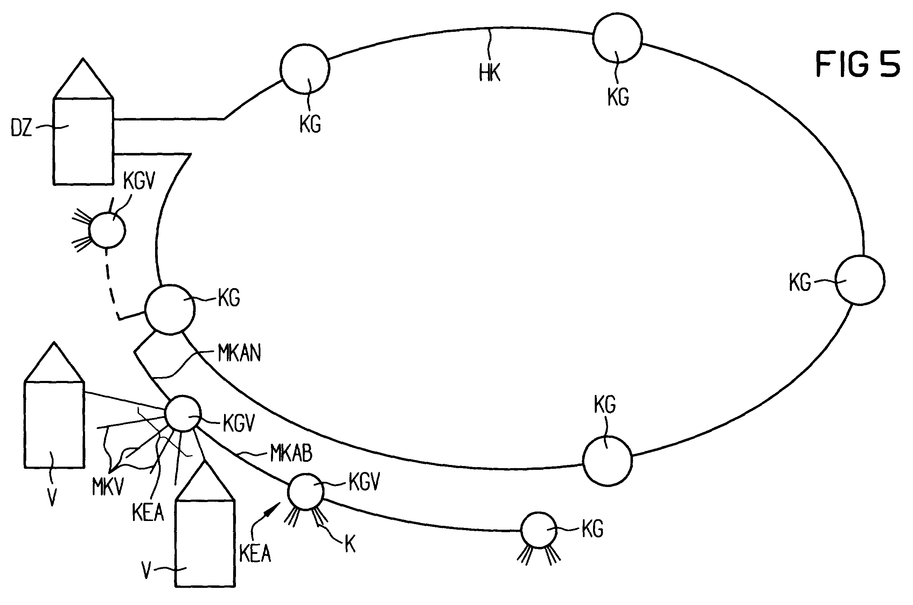

In Figur 5 wird in einer Skizze schematisch vermittelt, daß die genannten Kabeleinführungsadapter KEA gemäß der Erfindung in einem Lichtwellenleiternetz besonders vorteilhaft eingesetzt werden können, da gerade im Bereich zu den jeweiligen Endteilnehmern viele einzelne Lichtwellenleiter - Verzweigungsleitungen benötigt werden. Die Skizze stellt ein Lichtwellenleiternetz dar, bei dem eine Ringleitung zum Einsatz kommt, die von einem Datenzentrum DZ ausgeht und dort wieder endet. Im Hauptkreis HK können je nach Größe des Netzes entsprechend viele Kabelgarnituren KG für Abzweige eingesetzt werden. In den Kabelgarnituren KG erfolgt jeweils die entsprechende Aufteilung und Fortführung der Lichtwellenleiter, die dann in den entsprechenden Umhüllungen weitergeleitet werden. Bei der Verzweigung werden je nach Erfordernis die erfindungsgemäßen Kabeleinführungsadapter KEA eingesetzt. Es ist z.B. besonders eine Aufteilung gemäß Figur 4 durch die korrespondierenden Bezeichnungen hervorgehoben. So wird in der Kabelgarnitur KGV ein ankommendes Mikrokabel MKAN eingeführt, über einen Kabeleinführungsadapter KEA auf mehrere Einzelkabel MKV zu den einzelnen Teilnehmern bzw. Verbrauchern V verteilt und die restlichen Lichtwellenleiter in einem abgehenden Mikrokabel MKAB weitergeleitet zu weiteren Kabelgarnituren KG mit weiteren Verteilern.

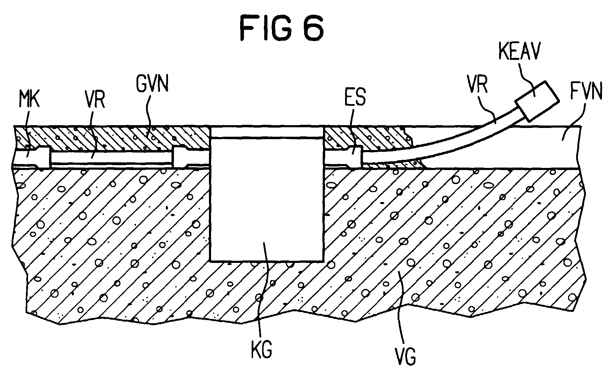

Figur 6 zeigt einen Kabeleinführungsadapter nach der zweiten Lösung der Aufgabenstellung, wobei diese Ausführung auch als Zusatz zu dem vorhergehend gezeigten Kabeleinführungsadapter angesehen werden kann. Es handelt sich darum, daß ein Verlängerungsrohr VR an den Kabeleinführungsstutzen ES einer Kabelgarnitur KG angeschlossen wird, wobei diese in einem Verlegegrund VG fest installiert ist. Die Zuleitungen zu den Einführungsstutzen ES der Kabelgarnitur KG sind in Verlegenuten eingebettet, wobei die linke Verlegenut GVN wieder aufgefüllt ist. Die rechte Verlegenut FVN ist teils freigelegt, so daß das Verlängerungsrohr VR für die Anschlußarbeiten herausgebogen werden kann. Der Anschluß eines weiteren Lichtwellenleiterkabels erfolgt dann über einen einfachen Kabeleinführungsadapter KEAV mit nur einem Ausgang oder über einen Kabeleinführungsadapter der vorher beschriebenen Art, wenn mehrere Lichtwellenleiterkabel angeschlossen werden sollen. Die Länge des Verlängerungsrohres VR beträgt zwischen 0,5 und 1 m, so daß dadurch genügend Abstand zur Kabelgarnitur gegeben ist. Nach den Anschlußarbeiten wird das Verlängerungsrohr VR und das oder die Lichtwellenleiterkabel in die Verlegenut eingesetzt, die dann noch aufgefüllt wird.

## Patentansprüche

1. Kabeleinführungsadapter für Kabeleinlässe bei Lichtwellenleiterkabelgarnituren,
**dadurch gekennzeichnet,**
daß ein rohrförmiger Aufnahmekörper (AZ, AK) an einem Ende einen Abschluß (AKG) mit einer Einführung (EM) für einen Kabelgarniturenabschluß (H) und am zweiten Ende einen Verteilerabschluß (VA) mit mehreren Einführungsöffnungen (E) aufweist, wobei in jeder Einführungsöffnung (E) ein Röhrchen (R) mit nach auswärts gerichtetem Überstand (U) angeordnet ist, an dessen freiem Ende jeweils ein Lichtwellenleiterkabel (MK) dicht ansetzbar ist.

2. Kabeleinführungsadapter nach Anspruch 1,
**dadurch gekennzeichnet,**
daß als Kabelgarniturenabschluß (H) eine Hülse in der Einführung (EM) des Abschlusses (AKG) eingesetzt ist.

3. Kabeleinführungsadapter nach Anspruch 1,
**dadurch gekennzeichnet,**
daß der Abschluß (AKG) einen rohrförmigen Ansatz (RA) aufweist, der einen dem Kabeleinlaß einer Kabelgarnitur angepaßten Durchmesser aufweist.

4. Kabeleinführungsadapter nach einem der Ansprüche 2 oder 3,
**dadurch gekennzeichnet,**
daß der Innendurchmesser der Hülse (H) oder des Ansatzes (RA) so bemessen ist, daß der Kabeleinlaß, insbesondere ein Kabeleinführungsstutzen (ES) der Kabelgarnitur (KG), in die Hülse des Kabelgarniturenabschlusses (H) oder den Ansatz (RA) einführbar ist.

5. Kabeleinführungsadapter nach einem der Ansprüche 2 oder 3,
**dadurch gekennzeichnet,**
daß der Außendurchmesser der Hülse des Kabelgarniturenabschlusses (H) oder des Ansatzes (RA) so bemessen ist, daß die Hülse (H) oder der Ansatz (RA) in den Kabeleinlaß, insbesondere eines Kabeleinführungsstutzens (ES) einführbar ist.

6. Kabeleinführungsadapter nach einem der vorhergehenden Ansprüchen,
**dadurch gekennzeichnet,**
daß die gegenseitige Fixierung und Abdichtung an den Verbindungsstellen (VS1, VS2, RE) durch eine Krimp-, Quetsch-, Schraub- oder Gummiverbindung hergestellt ist.

7. Kabeleinführungsadapter nach einem der Ansprüche 1 bis 5,
**dadurch gekennzeichnet,**
daß die gegenseitige Fixierung und Abdichtung an den Verbindungsstellen (VS1, VS2, RE) durch eine Löt- oder Schweißverbindung hergestellt ist.

8. Kabeleinführungsadapter nach einem der Ansprüche 1 bis 5,
**dadurch gekennzeichnet,**
daß die gegenseitige Fixierung und Abdichtung an den Verbindungsstellen (VS1, VS2, RE) durch eine Klebeverbindung hergestellt ist.

9. Kabeleinführungsadapter nach einem der Ansprüche 1 bis 5,
**dadurch gekennzeichnet,**
daß die gegenseitige Fixierung (VS3) durch einen aufgeschrumpften Schrumpfschlauch (SS) hergestellt ist.

10. Kabeleinführungsadapter nach einem der vorhergehenden Ansprüche,
**dadurch gekennzeichnet,**
daß der Aufnahmekörper (AZ) zylindrische Außenform aufweist und daß der innere Hohlraum (HR) sich konusförmig zum kabelgarniturenseitigen Abschluß (AKE) hin verjüngt.

11. Kabeleinführungsadapter nach einem der Ansprüche 1 bis 9,
**dadurch gekennzeichnet,**
daß der Aufnahmekörper (AK) eine zum kabelgarniturenseitigen Abschluß (AKE) sich konisch verjüngende Außenform aufweist.

12. Kabeleinführungsadapter nach einem der vorhergehenden Ansprüche,
**dadurch gekennzeichnet,**
daß die Einführungsöffnungen (E) im Verteilerabschluß (VA) auf einer Kreislinie verteilt angeordnet sind.

13. Kabeleinführungsadapter nach einem der vorhergehenden Ansprüche,
d**adurch gekennzeichnet,**
daß der kabelgarniturenseitige Abschluß (AKG) an einen tangential angesetzten Einlaßstutzen (ES) einer zylinderförmigen Kabelgarnitur (KG) angeordnet ist.

14. Kabeleinführungsadapter nach einem der vorhergehenden Ansprüche,
**dadurch gekennzeichnet,**
daß der Aufnahmekörper (AZ, AK) aus Halbschalen (HS) besteht.

15. Kabeleinführungsadapter nach einem der vorhergehenden Ansprüche,
**dadurch gekennzeichnet,**
daß die Hülse des Kabelgarniturenabschlusses(H) und die Röhrchen (R) aus Kupfer bestehen.

16. Kabeleinführungsadapter nach einem der Ansprüche 1 bis 14,
**dadurch gekennzeichnet,**
daß die Hülse des Kabelgarniturenabschlusses(H) und die Röhrchen (R) aus Messing bestehen.

17. Kabeleinführungsadapter nach einem der Ansprüche 1 bis 14,
**dadurch gekennzeichnet,**
daß die Hülse des Kabelgarniturenabschlusses(H) und die Röhrchen (R) aus Stahl bestehen.

18. Kabeleinführungsadapter nach einem der Ansprüche 1 bis 14,
**dadurch gekennzeichnet,**
daß die Hülse des Kabelgarniturenabschlusses(H) und die Röhrchen(R) aus Aluminium bestehen.

19. Kabeleinführungsadapter nach einem der vorhergehenden Ansprüche,
**dadurch gekennzeichnet,**
daß der Überstand (U) der in den Einführungsöffnungen (E) eingesetzten Röhrchen (R) 10 bis 50 cm, vorzugsweise 20 bis 30 cm beträgt.

20. Kabeleinführungsadapter nach einem der vorhergehenden Ansprüche,
**dadurch gekennzeichnet,**
daß die Halbschalen des Aufnahmekörpers (AZ,AK) Führungen und Nuten zur gegenseitigen Fixierung aufweisen und daß Dichtungen eingefügt sind.

21. Kabeleinführungsadapter nach einem der vorhergehenden Ansprüche,
**dadurch gekennzeichnet**,
daß die Halbschalen über ein Filmscharnier zusammenhängen.

22. Kabeleinführungsadapter für einen Kabelgarnitureneingang einer Kabelgarnitur,
**dadurch gekennzeichnet,**
daß ein Verlängerungsrohr (VR)als erster Kabeleinführungsadapter an einen Kabelgarnitureneingangsstutzen (ES) angesetzt ist und daß das freie Ende des Verlängerungsrohres (VR)an ein einzuführendes Lichtwellenleiterkabel (MK) oder an einen zweiten anzusetzenden Kabeleinführungsadapter (KEA,KEV) mit einem oder mehreren Eingängen (E) angepaßten Anschluß aufweist.

23. Kabeleinführungsadapter nach Anspruch 22,
**dadurch gekennzeichnet,**
daß die Länge des Verlängerungsrohres (VR) zwischen 0,5 und 1m beträgt.

24. Kabeleinführungsadapter nach einem der Ansprüche 22 oder 23,
**dadurch gekennzeichnet,**
daß das Verlängerungsrohr (VR) aus biegsamen Material, vorzugsweise aus dem gleichen Material wie ein anzuschließendes Rohr eines Mikrokabels oder eines weiteren Kabeleinführungsadapters.
